# EUROPÄISCHE PATENTANMELDUNG

(11) **EP 2 410 480 A1**
(43) Veröffentlichungstag der Anmeldung: **25.01.2012**
(21) Anmeldenummer: 11005907.8
(22) Anmeldetag: 19.07.2011
(51) Int. Cl.: G06Q 30/00

(54) **Verfahren und System zur Prüfung produktbezogener Informationen**

(30) Priorität: 21.07.2010 DE 102010031712
(71) Anmelder: Giesecke&Devrient, 81677 München (DE)
(72) Erfinder: Spitz, Stephan, Dr., 85757 Karlsfeld (DE); Fiedler, Michael, Dr., 81369 München (DE); Oliver, Paul, 85435 Erding (DE)

(57) **Zusammenfassung**

Ein Verfahren zur Prüfung einer Eigentümerschaft an einem Produkt (P) durch einen Prüfer (10) umfasst die folgenden Schritte: Der Prüfer (10) fordert bei einem Hintergrundsystem (100) auf Basis einer Produktidentifikation (P_{ID}) des Produkts (P) eine Eigentümerinformation (300) zu dem Produkt (P) an (S2). In einem nächsten Schritt wird ein verschlüsselter Identitätsanteils (310) der Eigentümerinformation (300), welcher die Identität des Eigentümers (200) des Produkts (P) betrifft, an den Eigentümer (200) gesendet (S4). Dies geschieht auf Basis eines unverschlüsselten Kontaktdatenanteils (320) der Eigentümerinformation (300), welcher Kontaktdaten des Eigentümers umfasst. Der Eigentümer (200) entschlüsselt (S5) den verschlüsselten Identitätsanteil (310). Schließlich empfängt (S6) der Prüfer (10) zumindest einen Anteil (A) des entschlüsselten Identitätsanteils (310') von dem Eigentümer (200) als Eigentumsnachweis.

## Beschreibung

Die vorliegende Erfindung betrifft ein Verfahren und ein System zur Prüfung produktbezogener Informationen, insbesondere Informationen über den aktuellen, rechtmäßigen Eigentümer eines Produkts.

Werden Produkte, insbesondere wertvolle und teure Produkte, zum Verkauf angeboten, beispielsweise im Internet, ist es für einen interessierten Käufer wichtig zu wissen, ob das Produkt tatsächlich im Besitz und Eigentum dessen ist, der es anbietet. Auf der anderen Seite hat der Eigentümer ein berechtigtes Interesse, nicht sofort öffentlich als der Eigentümer bekannt zu werden und nur ausgewählten Interessenten nach einer ersten Kontaktaufnahme von dem Eigentümer selbst bestimmte Informationen bezüglich seiner Identität zukommen zu lassen.

Es sind Verfahren bekannt, mittels derer die Echtheit von Produkten, beispielsweise vor einem Kauf des Produkts, geprüft werden können.

Gemäß der WO 2010/103090 wird zu einem Produkt, beispielsweise einer wertvollen Uhr, ein portabler Datenträger, beispielsweise eine Chipkarte, ausgegeben. Darin ist neben das Produkt betreffenden Informationen auch ein digitales Echtheitszertifikat des Produkts gespeichert. Die Echtheit des Produkts kann nun bei einem gesicherten Authentisierungssystem geprüft werden, indem mittels des Datenträgers eine Datenkommunikationsverbindung zu dem Authentisierungssystem aufgebaut wird und in dem Authentisierungssystem das Produkt betreffende Informationen abgerufen werden.

Diese Abfrage ist nur für denjenigen möglich, der im Besitz des Datenträgers ist.

Die EP 1593 088 B1 beschreibt ein Verfahren zur Produktsicherung und zur Prüfung der Echtheit damit gesicherter Produkte, beispielsweise von Medikamenten. Dabei wird jedes einzelne Produkt mittels eines Produktidentifizierers eindeutig identifizierbar. Weiterhin wird dem Produktidentifizierer ein digitales Siegel geeignet eindeutig zugeordnet und zumindest teilweise auf dem Produkt oder dessen Verpackung aufgebracht. In einem Registrierungsserver sind die Produktidentifizierer aller gesicherten Produkte gespeichert. Nach Empfang des zumindest teilweise auf dem Produkt aufgebrachten Siegels kann der Registrierungsserver das vollständige Siegel aus einer Datenbank auslesen und dadurch das Produkt authentifizieren und dessen Echtheit bestätigen.

Beide Verfahren unterstützen lediglich eine Echtheitsprüfung eines Produkts, können aber keine Aussage über den aktuellen Eigentümer eines Produkts machen.

Aufgabe der vorliegenden Erfindung ist es, ein Verfahren und ein System bereitzustellen, welches es technisch ermöglicht, Informationen bezüglich eines Eigentümers eines Produktes derart gesichert zu verwalten, dass es - vorzugsweise während des gesamten Lebenszyklus des Produkts - für einen Interessenten möglich ist, gesicherte Informationen bezüglich eines aktuellen Eigentümers des Produkts zu ermitteln, wobei die Anonymität des Eigentümers gemäß Vorgaben des Eigentümers gewahrt bleibt.

Diese Aufgabe wird durch ein Verfahren, ein System und eine Zertifizierungsstelle mit den Merkmalen der nebengeordneten Ansprüche gelöst. Vorteilhafte Ausgestaltungen und Weiterbildungen sind in den abhängigen Ansprüchen angegeben.

Ein erfindungsgemäßes Verfahren zur Prüfung einer Eigentümerschaft an einem Produkt durch einen Prüfer umfasst die folgenden Schritte: Der Prüfer fordert bei einem Hintergrundsystem auf Basis einer Produktidentifikation des Produkts eine Eigentümerinformation zu dem Produkt an. In einem nächsten Schritt wird ein verschlüsselter Identitätsanteils der Eigentümerinformation, welcher die Identität des Eigentümers des Produkts betrifft, an den Eigentümer gesendet. Dies geschieht auf Basis eines unverschlüsselten Kontaktdatenanteils der Eigentümerinformation, welcher Kontaktdaten des Eigentümers umfasst. Der Eigentümer entschlüsselt den verschlüsselten Identitätsanteil. Schließlich empfängt der Prüfer zumindest einen Anteil des entschlüsselten Identitätsanteils von dem Eigentümer als Eigentumsnachweis.

Gemäß einer ersten Ausführungsform sendet das Hintergrundsystem den verschlüsselten Identitätsanteil direkt an den Eigentümer.

Gemäß einer alternativen, zweiten Ausführungsform sendet das Hintergrundsystem die Eigentümerinformation mit dem verschlüsselten Identitätsanteil und dem unverschlüsselten Kontaktdatenanteil an den Prüfer. Der Prüfer sendet dann den verschlüsselten Identitätsanteil auf Basis der Kontaktdaten des Kontaktdatenanteils an den Eigentümer.

Kontaktdaten des Prüfers, z.B. eine e-Mail-Adresse oder dergleichen, welche es dem Eigentümer ermöglichen, den Anteil des entschlüsselten Identitätsanteils an den Prüfer zu senden, kann der Eigentümer gemäß der zweiten Ausführungsform beispielsweise aus der Nachricht des Prüfers entnehmen, mit welcher der Prüfer dem Eigentümer den verschlüsselten Identitätsanteil gesendet hat. Im Falle der ersten Ausführungsform übermittelt das Hintergrundsystem dem Eigentümer entsprechende Kontaktdaten den Prüfers, welche dieses seinerseits beispielsweise der ursprünglichen Anforderung der Eigentümerinformation durch Prüfer entnehmen kann.

Ein erfindungsgemäßes System, beispielsweise ein Hintergrundsystem, zur Unterstützung der Prüfung einer Eigentümerschaft an einem Produkt durch einen Prüfer ist demnach eingerichtet, zu einem Produkt eine Produktidentifikation und eine Eigentümerinformation zu verwalten. Weiter ist das System eingerichtet, auf Anforderung der Eigentümerinformation durch einen Prüfer einen verschlüsselten Identitätsanteil der Eigentümerinformation, welcher die Identität des Eigentümers betrifft, an den Eigentümer zu senden oder den verschlüsselten Identitätsanteil sowie einen unverschlüsselten Kontaktdatenanteil der Eigentümerinformation, welcher Kontaktdaten des Eigentümers umfasst, an den Prüfer zu senden.

Auf diese Weise kann jeder Interessent, d.h. ein beliebiger Prüfer, alleine auf Basis der Produktidentifikation bei dem Hintergrundsystem eine Anfrage nach Eigentümerinformationen ein Produkt betreffend stellen. Der Prüfer benötigt dazu insbesondere keinen Zugang zu dem Produkt, noch muss er direkt, d.h. persönlich, mit dem Eigentümer in Kontakt kommen. Auch die Identität des Prüfers kann anonym bleiben. Das Hintergrundsystem mit den dort verwalteten Daten, insbesondere die Produktidentifikation, welche dort zusammen mit der Eigentümerinformation und gegebenenfalls weiteren, das Produkt betreffende Daten gesichert gespeichert sind, sowie die durch das System bereitgestellte gesicherte Datenkommunikation ermöglicht eine indirekte Anfrage des Prüfers an den Eigentümer. Dieser kann seine Eigentümerschaft alleine dadurch beweisen, dass er in der Lage ist, den verschlüsselten Identitätsanteil der Eigentümerinformation zu entschlüsseln. Der Prüfer seinerseits kann daraus ableiten, dass der rechtmäßige Eigentümer bei dem Hintergrundsystem registriert ist und seine Eigentümerdaten dort hinterlegt hat. Dazu ist es nicht notwendig, dass der Eigentümer sämtliche Identitätsdaten, welche in dem entschlüsselten Identitätsdatenanteil vorliegen, an den Prüfer sendet. Es reicht aus, dass der Prüfer erkennen kann, dass die von ihm empfangenen Daten Teil des entschlüsselten Identitätsanteils sind. Der Eigentümer hat die Kontrolle darüber, wie viel er über seine Identität preisgeben möchte. Der Prüfer kann auch bei unvollständigen Angaben sicher sein, mit dem rechtmäßigen Eigentümer in Kontakt getreten zu sein.

Im Rahmen der vorliegenden Anmeldung wird aus Gründen der Übersichtlichkeit und Knappheit nicht zwischen einem "Eigentümer", dem das Produkt rechtlich gehört, und einem "Besitzer", welcher die tatsachliche Herrschaft über das Produkt ausübt, unterschieden. Wann immer für eine Handlung des Eigentümers der tatsächliche Besitz der Sache notwendig ist, kann davon ausgegangen, dass er die Sache dann auch besitzt.

Vorzugsweise werden die Eigentümerinformationen durch das Hintergrundsystem digital signiert. Auf diese Weise kann sichergestellt werden, dass die Eigentümerinformation, welche das Hintergrundsystem - in verschlüsselter Form - an den Eigentümer oder den Prüfer sendet, und die Teile der Eigentümerinformation, welche der Eigentümer - in entschlüsselter Form - an den Prüfer sendet, einander entsprechen. Daraus ergibt sich für den Prüfer eindeutig, dass die Eigentümerinformation nicht an einer Stelle, beispielsweise während der Datenübertragung oder beim Eigentümer, irrtümlich oder absichtlich manipuliert worden sind. Insbesondere kann ausgeschlossen werden, dass ein Dritter, welcher beispielsweise die Datenkommunikation zwischen dem Prüfer und dem Eigentümer mitliest und abfängt sich als Eigentümer ausgibt, indem er, anstelle des wahren Eigentümers, fingierte entschlüsselte Eigentümerdaten an den Prüfer sendet.

Gemäß einer bevorzugten Ausführungsform des erfindungsgemäßen Verfahrens wird der Identitätsanteil der Eigentümerinformation mittels eines öffentlichen Schlüssels des Eigentümers verschlüsselt und mittels eines geheimen Schlüssels des Eigentümers entschlüsselt. Dabei sind der öffentliche Schlüssel und der geheime Schlüssel in der Regel Teil eines gewöhnlichen asymmetrischen Kryptosystems. Auf diese Weise hat der Eigentümer die Wahl: er kann seine Identitätsinformation dem Hintergrundsystem im Klartext, also unverschlüsselt, bereitstellen. Diese Daten werden dann erst durch das Hintergrundsystem mittels des öffentlichen Schlüssels des Eigentümers verschlüsselt, bevor das Hintergrundsystem die verschlüsselte Eigentümerinformation auf Anfrage des Prüfers an den Eigentümer oder den Prüfer versendet. Auf der anderen Seite kann der Eigentümer dem Hintergrundsystem auch bereits verschlüsselte Eigentümerinformationen bereitstellen. Auf diese Weise ist die Anonymität des Eigentümers noch besser geschützt. Es ist dann lediglich erforderlich, dass sich der Eigentümer in geeigneter Weise bei dem Hintergrundsystem authentisieren kann - wie nachstehend detailliert beschrieben.

In beiden Fällen ist es alleine der Eigentümer, der die verschlüsselte Identitätsinformation entschlüsseln kann, denn nur er ist im Besitz des geheimen Schlüssels. Es ist allerdings alternativ möglich, dass die Eigentümerinformation auf andere Art ver- und entschlüsselt wird, beispielsweise mittels eines symmetrischen Verschlüsselungsverfahrens. Dabei ist es notwendig - falls der Eigentümer dem Hintergrundsystem unverschlüsselte Eigentümerinformationen bereitstellt -, dass sich der Eigentümer und das Hintergrundsystem zuvor in bekannter Weise auf einen gemeinsamen, nur diesen beiden Parteien bekannten Schlüssel geeinigt haben.

Gemäß einer weiteren bevorzugten Ausführungsform wird dem Eigentümer des Produkts von einer Zertifizierungsstelle eine Identifikationsnummer zugeteilt. Diese Identifikationsnummer wird auch dem Hintergrundsystem mitgeteilt und der entsprechenden Produktidentifikation des Produkts zugeordnet. Die Identifikationsnummer dient - wie nachstehend beschrieben - im Wesentlichen zu Authentisierungszwecken. Der Eigentümer des Produkts kann sich mittels der Identifikationsnummer gegenüber dem Hintergrundsystem oder auch der Zertifizierungsstelle ausweisen.

Eine solche erfindungsgemäße Zertifizierungsstelle ist demnach zum Erzeugen und Ausgeben einer Identifikationsnummer an einen Eigentümer eines Produktes eingerichtet, mittels derer sich der Eigentümer bei einem Hintergrundsystem oder der Zertifizierungsstelle authentisieren kann. Vorzugsweise sind die Zertifizierungsstelle und das Hintergrundsystem voneinander unabhängig und werden von verschiedenen, unabhängigen Dienstleistern betrieben. Die Zertifizierungsstelle kann beispielsweise von einem Sicherheitsdienstleister betrieben werden, das Hintergrundsystem beispielsweise von einem Telekommunikationsunternehmen oder einem Internetprovider.

Für das Verfahren ist es wesentlich, dass die bei dem Hintergrundsystem gespeicherten und von einem Prüfer anforderbaren Daten stets auf einem aktuellen Stand sind. Dies gilt insbesondere für die Eigentümerinformation, welche sich ja bei einem Eigentumsübergang ändert. Es müssen daher Schritte vorgesehen sein, welche einen Eigentumsübergang eindeutig nachvollziehbar und dokumentierbar machen lassen. Dabei muss sichergestellt werden, dass die Eigentümerinformation gegenüber einer Einsicht Dritter geschützt bleibt und nur der jeweils berechtigte Eigentümer entsprechende Eigentümerinformationen zu dem Produkt ändern oder geänderte Eigentümerinformationen bestätigen kann. Weiter muss gewährleistet sein, dass das Hintergrundsystem stets über den aktuellen Eigentümer und dessen Eigentümerinformation informiert ist.

Vorzugsweise ist es vorgesehen, dass sich ein Eigentümer an einem Produkt bei einem Übergang des Eigentums an dem Produkt - wenn also der aktuelle Eigentümer das Produkt an einen neuen Eigentümer übergibt und dieser das Produkt als sein Eigentum annimmt - bei der Zertifizierungsstelle meldet. Dazu authentisiert sich der alte Eigentümer bei der Zertifizierungsstelle mittels seiner Identifikationsnummer und beantragt dort - unter zusätzlicher Angabe der Produktidentifikation - eine neue Identifikationsnummer für den neuen Eigentümer. Der alte Eigentümer gibt damit gegenüber der Zertifizierungsstelle an, dass er nicht länger Eigentümer an dem Produkt mit der entsprechenden Produktidentifikation ist. Gleichzeitig gibt der alte Eigentümer zumindest solche Angaben über den neuen Eigentümer an die Zertifizierungsstelle weiter, auf Basis derer die Zertifizierungsstelle in der Lage ist, den neuen Eigentümer zu kontaktieren. Es ist auch möglich, dass der alte Eigentümer, falls er zumindest teilweise Eigentümerinformationen betreffend den neuen Eigentümer kennt, diese an die Zertifizierungsstelle weitergibt. Von dort können diese Eigentümerinformationen dann, zusammen mit der neuen Identifikationsnummer, an das Hintergrundsystem übergeben werden. Solche Eigentümerinformationen betreffend den neuen Eigentümer, welche der alte Eigentümer nicht kennt, lässt der neue Eigentümer in einem späteren, nachfolgend beschriebenen Schritt, dem Hintergrundsystem zukommen.

Im Falle einer positiven Authentifizierung des alten Eigentümers erzeugt die Zertifizierungsstelle daraufhin eine neue Identifikationsnummer für den neuen Eigentümer. Diese neue Identifikationsnummer wird sowohl dem neuen Eigentümer als auch dem Hintergrundsystem - unter Angabe der Produktidentifikation - mitgeteilt. Der alte Eigentümer erlangt keine Kenntnis über die neue Identifikationsnummer. Die Datenkommunikation zwischen der Zertifizierungsstelle und den Eigentümern erfolgt vorzugsweise verschlüsselt. Auf diese Weise kann der Akt eines Eigentumsübergangs an einem Produkt bei der Zertifizierungsstelle und dem Hintergrundsystem dokumentiert werden, ohne dass Eigentümerdaten öffentlich gemacht werden müssen.

Um den Vorgang des Eigentumsübergangs bei dem Hintergrundsystem vollständig zu dokumentieren, ist es notwendig, dass sich auch der neue Eigentümer bei dem Hintergrundsystem authentisiert. Weiterhin sollte er dort über ihn gespeicherte Eigentümerinformationen prüfen bzw. unvollständige Eigentümerinformationen ergänzen.

Vorzugsweise authentisiert sich der neue Eigentümer bei dem Hintergrundsystem mit Bezug auf die Produktidentifikation mittels der neuen Identifikationsnummer, welche er von der Zertifizierungsstelle empfangen hat. Damit kann das Hintergrundsystem - welches diese neue Identifikationsnummer ebenfalls von der Zertifizierungsstelle empfangen hat - den neuen Eigentümer eindeutig authentifizieren. Die bei dem Hintergrundsystem zusammen mit der Produktidentifikation gespeicherte Eigentümerinformation wird entsprechend aktualisiert.

Eine Authentisierung des Eigentümers bei dem Hintergrundsystem ist zu jedem Zeitpunkt, also unabhängig von einem Eigentumsübergang, möglich. Ein Eigentümer kann sich beispielsweise mittels seiner Identifikationsnummer bei dem Hintergrundsystem anmelden, um das Produkt oder die Eigentümerinformation betreffende Daten zu ändern oder zu aktualisieren.

Vorzugsweise sind in dem Hintergrundsystem zu einem Produkt, welches durch seine Produktidentifikation eindeutig identifizierbar ist, neben der Eigentümerinformation weitere Daten gespeichert, die das Produkt betreffen. Darin können das Produkt beschreibende Daten enthalten sei, beispielsweise eine technische Spezifikationen, das Produkt darstellende Bilder oder dergleichen. Weiterhin kann dort gespeichert sein, wenn sich ein Produkt verändert hat, beispielsweise nach einer Aktualisierung, einem Upgrade, einer Reparatur oder dergleichen. Schließlich kann zu dem Produkt gespeichert werden, wenn das Produkt dem Eigentümer abhanden gekommen ist oder wenn das Produkt untergegangen ist. Das heißt, der Eigentümer kann das Hintergrundsystem - nach erfolgreicher Authentisierung - insbesondere auch darüber informieren, wenn er das Produkt verloren hat, das Produkt gestohlen worden ist oder auf sonstige Weise abhanden gekommen ist. Weiterhin kann das System von dem Eigentümer informiert werden, wenn das Produkt vernichtet, stark beschädigt oder in sonstiger Weise unbrauchbar geworden ist.

In der Regel kann ein Prüfer bei dem Hintergrundsystem nach Angabe der Produktidentifikation solche Informationen über das Produkt an sich, welche nicht die Identität des Eigentümers betreffen, frei einsehen - sofern der Eigentümer diese Daten freigegeben hat. Dem Eigentümer steht es frei, allgemeine Produktinformationen nur bedingt der Öffentlichkeit zugänglich zu machen oder dem Hintergrundsystem nicht oder nur in begrenztem Rahmen zur Verfügung zu stellen.

Weiter besteht die Möglichkeit, dass dem Produkt ein portabler Datenträger zugeordnet wird, beispielsweise in Form einer Chipkarte oder dergleichen. Dieser Datenträger ist alternativ oder zusätzlich zu der Identifikationsnummer geeignet, den Eigentümer des Produkts gegenüber dem Hintergrundsystem zu authentisieren. Dazu sind auf dem Datenträger solche Daten manipulationsgesichert gespeichert, welche das Produkt identifizieren, beispielsweise die Produktidentifikation. Der Datenträger bleibt immer bei dem Produkt und wird bei einem Eigentumsübergang - wie das Produkt - dem neuen Eigentümer übergeben. Auf diese Weise kann sich lediglich derjenige gegenüber dem Hintergrundsystem mit dem Datenträger ausweisen, der diesen auch in seinem Besitz hat. Vorzugsweise wird der Datenträger von einer vertrauenswürdigen Stelle ausgegeben oder zumindest signiert, beispielsweise von der vorstehend genannten Zertifizierungsstelle. Auf diese Weise kann ausgeschlossen werden, dass gefälschte, vermeintlich dem Produkt zugeordnete Datenträger in Verkehr gebracht werden.

Für manche Produkte ist es möglich, den Datenträger im Wesentlichen fest an das Produkt zu binden. Dabei ist es beispielsweise bei technischen Produkten möglich, den Datenträger derart auszubilden, dass dieser für den Betrieb des technischen Produkts wesentliche Daten oder gar Funktionalitäten umfasst. D.h. das Produkt ist ohne den Datenträger nicht betreibbar. Dabei ist es lediglich notwendig, dass auf den Datenträger - während der Authentisierung mittels des Datenträgers gegenüber dem Hintergrundsystem - zugegriffen werden kann. Dazu kann der Datenträger beispielsweise temporär von dem Produkt gelöst werden, um z.B. mit einem geeigneten Lesegerät verbunden zu werden. Es ist aber auch möglich, dass das Produkt eine Schnittstelle aufweist, über welche direkt auf den Datenträger zugegriffen werden kann. Mittels eines solchen Datenträgers kann ein besonders sicherer Eigentums- und Besitznachweis geführt werden.

Eine weitere Alternative zur Authentisierung eines Eigentümers gegenüber dem Hintergrundsystem bildet ein Geheimdatum, beispielsweise eine PIN, welches dem Produkt - über die Produktidentifikation - zugeordnet ist und welches lediglich dem Eigentümer und dem Hintergrundsystem bekannt ist. Ein solches Geheimdatum hat vorzugsweise - wie die Identifikationsnummer - nur für den aktuellen Eigentümer Gültigkeit. Bei einem Eigentumsübergang gibt der alte Eigentümer das Geheimdatum dem neuen Eigentümer bekannt. Dieser kann dann - nach einem Eigentumsübergang - sich bei dem System einmalig noch mittels des alten Geheimdatums, d.h. z.B. der PIN, welche ihm der alte Eigentümer übergeben hat, authentisieren. Damit dokumentiert auch der neue Eigentümer den Eigentumsübergang - welcher dem Hintergrundsystem in der Regel bereits bekannt ist, beispielsweise dadurch, dass die Zertifizierungsstelle dem Hintergrundsystem bereits die neue Identifikationsnummer des neuen Eigentümers und eventuell bereits entsprechende Eigentümerinformationen mitgeteilt hat. Andernfalls kann der neue Eigentümer das Hintergrundsystem nun entsprechend informieren. In diesem Fall kann das Hintergrundsystem den alten Eigentümer kontaktieren, um auch von dessen Seite den stattgefundenen Eigentumsübergang bestätigen zu lassen.

Nun kann das Hintergrundsystem für den neuen Eigentümer ein neues Geheimdatum erzeugen und mitteilen. Der neue Eigentümer ist dann der einzige Inhaber dieses Geheimdatums und kann sich im Folgenden darüber bei dem Hintergrundsystem authentisieren. Alternativ kann vorgesehen sein, dass der neue Eigentümer, nachdem er sich mittels des alten Geheimdatums authentisiert hat, dieses zu einem neuen Geheimdatum ändert, welches nur ihm - und natürlich dann dem Hintergrundsystem - bekannt ist. Danach kann das geänderte Geheimdatum zur gewöhnlichen Authentisierung gegenüber dem Hintergrundsystem verwendet werden.

Gemäß einer bevorzugten Ausführungsform erfordert eine Authentisierung des Eigentümers gegenüber dem Hintergrundsystem eine Mehrzahl der vorstehend beschriebenen, alternativen Authentisierungsschritte. Dies gilt insbesondere für die Authentisierung eines neuen Eigentümers nach einem Eigentumsübergang. Das Hintergrundsystem kann dann beispielsweise sowohl die neue Identifikationsnummer als auch den Datenträger als auch das Geheimdatum des alten Eigentümers als Eigentumsnachweis des neuen Eigentümers verlangen. Andere Kombinationen sind möglich, beispielsweise neue Identifikationsnummer und Datenträger oder neue Identifikationsnummer und Geheimdatum des alten Eigentümers oder Datenträger und Geheimdatum des alten Eigentümers. Bei einer gewöhnlichen Authentisierung eines Eigentümers, wenn also nicht gerade ein Eigentumsübergang stattgefunden hat, können die Vorgaben des Hintergrundsystems gelockert werden. Es reicht dann beispielsweise eine Authentisierung auf Basis entweder der Identifikationsnummer oder des Datenträgers oder des Geheimdatums aus.

Sämtliche beschriebenen Datenübertragungsschritte zwischen den einzelnen Parteien werden vorzugsweise über ein Datenkommunikationsnetzwerk, beispielsweise das Internet, ein Mobilfunknetzwerk oder dergleichen, durchgeführt. Eine solche Datenkommunikation erfolgt vorzugsweise kryptographisch gesichert, beispielsweise auf Basis eines asymmetrischen Kryptosystems.

Um die Sicherheit des Systems zu gewährleisten, akzeptiert das Hintergrundsystem nur solche Einträge zu neuen Produkten, d.h. eine neue Produktidentifikation zusammen mit Eigentümerinformation und gegebenenfalls weiteren Produktinformationen, wenn die Existenz des entsprechenden Produkts und die Eigentümerschaft an dem Produkt für das Hintergrundsystem eindeutig erkennbar und nachgewiesen sind. Es kann beispielsweise vorgesehen sein, dass lediglich von dem Hintergrundsystem autorisierte Unternehmen berechtigt sind, neue Produktdaten einzustellen. Vorzugsweise sind diese Unternehmen von der Zertifizierungsstelle zertifiziert. Mit einem neuen Produkteintrag wird in der Regel auch eine erste Identifikationsnummer erzeugt, welche dem aktuellen Eigentümer zugewiesen wird. Analog kann auch eine PIN für den Eigentümer und ein Datenträger zu dem Produkt erzeugt und an den Eigentümer ausgegeben werden.

Die vorliegende Erfindung wird im Folgenden mit Bezug auf die beiliegenden Zeichnungen beispielhaft beschrieben. Darin zeigen:
- Figur 1: Schritte einer bevorzugten Ausführungsform des erfindungsgemäßes Verfahrens zum Prüfen einer Eigentümerinformation und
- Figur 2: Schritte zur gesicherten Dokumentation eines Eigentumsübergangs.

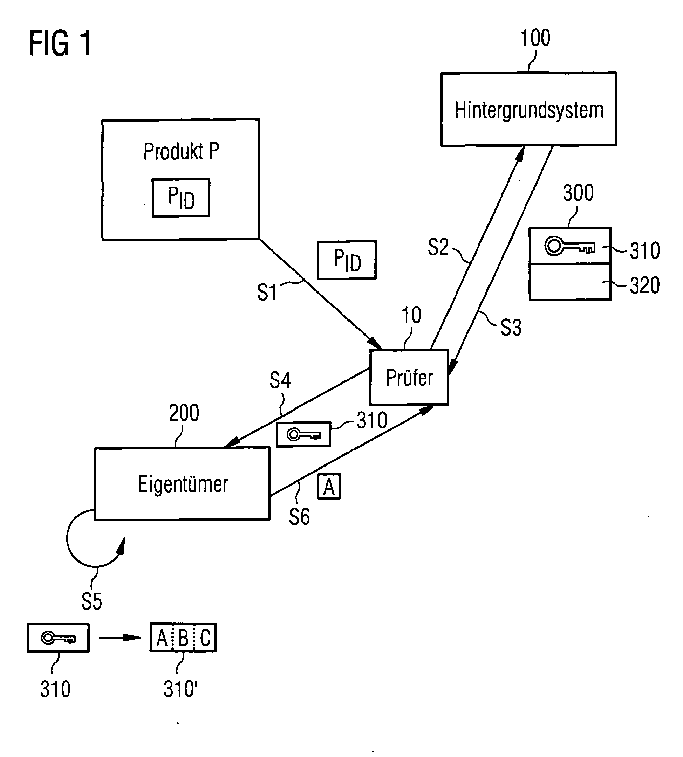

Mit Bezug auf Fig. 1 werden die wesentlichen Schritte eines Verfahrens beschrieben, mittels dessen ein Prüfer 10, der sich für ein Produkt P interessiert, welches beispielsweise zum Verkauf auf einer Internetplattform angeboten wird, über den Eigentümer 200 des Produkts P informieren kann. Mögliche Produkte sind beispielsweise Autos, Boote, Kunstgegenstände und dergleichen, welche neu oder gebraucht sein können.

In einem ersten Schritt S1 ermittelt der Prüfer 10 eine Produktidentifikation P_{ID}, mittels welcher das Produkt P eindeutig identifizierbar ist. Diese Produktidentifikation P_{ID} kann beispielsweise auf dem Produkt P aufgebracht sein und ist dem Produktangebot zu entnehmen. Die Produktidentifikation Pm kann eine beliebige Zeichenfolge sein, bestehend beispielsweise aus Zahlen, Buchstaben, Sonderzeichen oder dergleichen.

In einem zweiten Schritt S2 sendet der Prüfer 10 unter Angabe der Produktidentifikation Pm eine Anfrage an ein Hintergrundsystem 100, um Informationen über den Eigentümer 200 des Produkts P zu erhalten.

In dem Hintergrundsystem 100 ist zu dem Produkt P - und in der Regel einer Vielzahl von weiteren Produkten - neben der Produktidentifikation Pm eine Eigentümerinformation 300 gesichert gespeichert. Das Hintergrundsystem 100 umfasst einen Zentralrechner mit Rechen- und Speicherressourcen sowie entsprechende Softwaremittel, welche eingerichtet sind, die nachstehend beschriebenen Verfahrensschritte auszuführen.

Die Eigentümerinformation 300 umfasst in der Regel persönliche Daten des Eigentümers 200, beispielsweise seinen Namen, seine Anschrift, Telefon- und Mobilfunknummern, e-Mail-Adressen, Adressen von Webseiten und dergleichen. Zusätzlich dazu kann in dem Hintergrundsystem 100 zu dem Produkt P weitere Produktinformation gespeichert sein. Diese kann dazu dienen, das Produkt P eingehend zu beschreiben und darzustellen oder Auskunft über den aktuellen Zustand des Produkts P geben. In der Regel bestimmt der Eigentümer 200 des Produkts P, welche Produktinformation in dem Hintergrundsystem 100 bereitgestellt wird und inwieweit darauf frei zugegriffen werden kann. Die Eigentümerinformation 300 ist zum Schutz der persönlichen Daten des Eigentümers 200 nicht frei einsehbar.

Nachdem das Hintergrundsystem 100 den Antrag des Prüfers 10 empfangen hat, wird die Eigentümerinformation 300 dort in geeigneter Weise aufbereitet, um in Schritt S3 an den Prüfer 10 gesendet zu werden. Um die Anonymität des Eigentümers 200 zu wahren und es diesem zu überlassen, wie viele und welche seiner persönlichen Daten er dem Prüfer 10 offenbaren möchte, wird der Anteil der Eigentümerinformation 300, welcher Aufschluss über die Identität des Eigentümers 200 zulassen könnte, lediglich in verschlüsselter Form 310 an den Prüfer 10 gesendet. Daneben erhält der Prüfer 10 noch einen unverschlüsselten Kontaktdatenanteil 320. Dieser umfasst Kontaktdaten, auf Basis derer der Prüfer 10 mit dem Eigentümer 200 im Kontakt treten kann. Diese Kontaktdaten 320 sind derart anonymisiert, dass daraus keine Schlüsse auf die Identität des Eigentümers 200 gezogen werden können. Solche Kontaktdaten 320 können beispielsweise in Form einer e-Mail-Adresse bereitgestellt werden.

Der Eigentümer 200 kann dem Hintergrundsystem 100 die Eigentümerinformation 300 im Klartext, d.h. unverschlüsselt, oder aber bereits verschlüsselt - bis auf die anonymisierten Kontaktdaten 320 - bereitstellen. Im ersten Fall verschlüsselt das Hintergrundsystem 100 die Eigentümerinformation 300 - bis auf die Kontaktdaten 320 - bevor diese an den Prüfer 10 gesendet werden. Vorzugsweise wird zur Verschlüsselung im Zusammenhang mit der Eigentümerinformation 300 ein asymmetrisches Kryptosystem verwendet. Die Eigentümerdaten 300 werden dabei mittels eines öffentlichen Schlüssels des Eigentümers 200 verschlüsselt. Das Entschlüsseln mittels des geheimen Schlüssels des Eigentümers 200 bleibt alleine diesem vorbehalten. Andere bekannte Verschlüsselungssysteme, beispielsweise auf Basis einer symmetrischen Verschlüsselung, sind gleichfalls einsetzbar. Dazu müssten sich der Eigentümer 200 und das Hintergrundsystem 100 zuvor über einen nur diesen beiden Parteien bekannten Schlüssel einigen, falls der Eigentümer 200 dem Hintergrundsystem Eigentümerinformationen 300 in unverschlüsselter Form bereitstellt - welche dann von dem Hintergrundsystem 100 vor dem Senden an den Prüfer 10 oder den Eigentümer 200 im Umfang des Identitätsanteils 310 verschlüsselt werden müssten.

Nachdem der Prüfer 10 die Eigentümerinformation 300, welche den verschlüsselten Identitätsanteil 310 und den unverschlüsselten Kontaktdatenanteil 320 umfasst, empfangen hat, sendet er in Schritt S4 den verschlüsselten Identitätsanteil 310 - auf Basis der Kontaktdaten 320 in dem Kontaktdatenanteil - an den Eigentümer 200.

Alternativ zu den Schritten S3 und S4 kann das Hintergrundsystem 100 den verschlüsselten Identitätsanteil 310 auf Basis der Kontaktdaten des Kontaktdatenanteils 320 auch direkt an den Eigentümer 200 senden.

Der Eigentümer 200 entschlüsselt in Schritt S5 den Identitätsanteil 310. Die daraus resultierenden unverschlüsselten Identitätsdaten 310' umfassen in der Regel mehrere Datensätze A, B, C, welche verschiedene Informationen über den Eigentümer 200 enthalten, beispielsweise den Namen C, eine Anschrift B und eine Telefonnummer A. Der Eigentümer 200 kann nun entscheiden, welche dieser Daten der Prüfer 10 einsehen kann. Dementsprechend wählt der Eigentümer 200 einen Teil A der entschlüsselten Identitätsdaten 310' aus und sendet diese in Schritt S6 an den Prüfer 10.

Alleine aus der Tatsache, dass der Eigentümer 200 überhaupt in der Lage war, die verschlüsselten Identitätsdaten 310 zu entschlüsseln, kann der Prüfer 10 folgern, dass er mit dem rechtmäßigen Eigentümer 200 des Produkts P in Kontakt steht, wenn er den Anteil A der entschlüsselten Identitätsdaten 310' empfängt, denn nur der Eigentümer 200 besitzt den Schlüssel zum Entschlüsseln dieser Daten 310. Der Inhalt des Anteils A der entschlüsselten Daten 310', im Beispiel eine Telefonnummer A, ist dafür eher zweitrangig. Anhand dieser Daten kann der Prüfer 10 nun eventuell erneut mit dem Eigentümer 200 in Kontakt treten, um weitere Informationen über diesen, das Produkt, ein eventuelles Kaufangebot und dergleichen auszutauschen und auch, um dem Eigentümer 200 die Möglichkeit zu geben, Informationen über die Identität den Prüfers 10, welche bisher nicht erkennbar war, zu gewinnen.

Sämtliche Daten, welche das Hintergrundsystem 100 in Schritt S3 an den Prüfer 10 (oder alternativ an den Eigentümer 200) sendet, werden zuvor von dem Hintergrundsystem 100 geeignet digital signiert. Damit ist sichergestellt, dass die Daten nicht unbefugt verändert werden können. Insbesondere kann der Prüfer 10 anhand der Signatur nachprüfen, ob der unverschlüsselte Identitätsdatenanteil A, welchen er in Schritt S6 von dem Eigentümer 200 empfängt, tatsächlich Teil der von dem Hintergrundsystem 100 gesendeten Daten 310 ist.

Gemäß der beschriebenen Ausführungsform erfolgt sämtliche Datenkommunikation zwischen den beteiligten Instanzen kryptographisch gesichert, beispielsweise mittels eines asymmetrischen Kryptosystems.

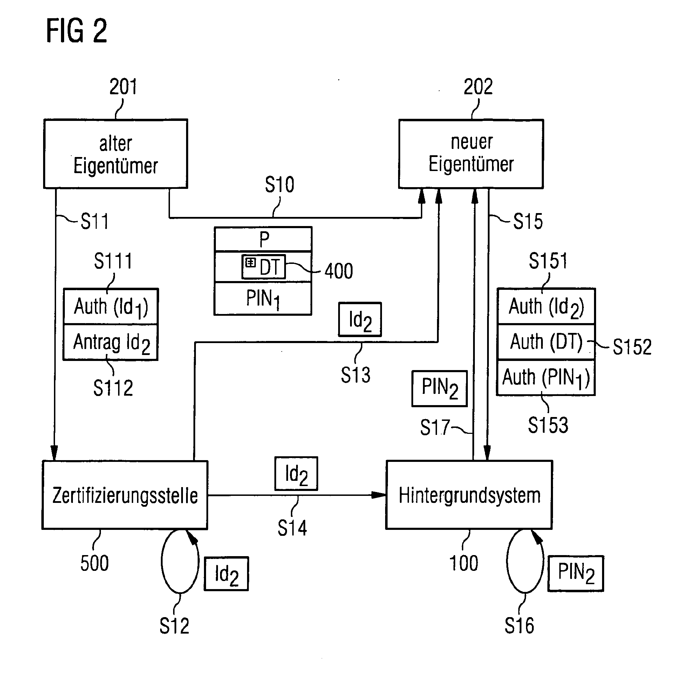

Mit Bezug auf Fig. 2 wird im Folgenden beschrieben, wie ein Eigentumsübergang an einem Produkt P in dem Hintergrundsystem 100 verarbeitet wird, ohne dass Eigentümerinformationen 300 öffentlich gemacht werden müssten und derart, dass in dem Hintergrundsystem 100 stets eine aktuelle Eigentümerinformation 300 gespeichert ist. Um einen solchen Eigentumsübergang gesichert dokumentieren und nachweisen zu können, sind weitere Authentisierungsdaten und -mittel vorgesehen.

Eine Zertifizierungsstelle 500 ist eingerichtet, einem Eigentümer 201 eines Produkts P eine Identitätsnummer Id₁ auszustellen. Auch die Zertifizierungsstelle 500 ist, ähnlich wie das Hintergrundsystem 100, mit geeigneten Hard- und Softwaremitteln ausgestattet, um die nachfolgend beschriebenen Schritte durchzuführen. Ein Eigentümer erhält diese Identifikationsnummer Id₁, wie nachfolgend mit Bezug auf die Schritte S11 bis S13 beschrieben, wenn das Eigentum an dem Produkt P an ihn übergeht. Die Identifikationsnummer Id₁ dient, wie ebenfalls nachfolgend genauer beschrieben, dem Eigentümer 201 sowohl zur Authentisierung gegenüber der Zertifizierungsstelle 500 als auch gegenüber dem Hintergrundsystem 100.

Weiterhin wird zu dem Produkt P ein Datenträger 400 ausgestellt, beispielsweise in Form einer Chipkarte oder dergleichen. Auf diesem Datenträger 400 sind in gesicherter Weise das Produkt P betreffende Daten, insbesondere die Produktidentifikation P_{ID}, gespeichert. Mittels dieses Datenträger 400 kann sich der Eigentümer und Besitzer des Produkts P bei dem Hintergrundsystem 100 authentisieren, denn es ist vorgesehen, dass dieser Datenträger 400 stets bei dem Produkt P verbleibt, bei einem Eigentumsübergang an dem Produkt P also wie das Produkt P vom alten Eigentümer 201 an den neuen Eigentümer 202 übergeht.

Schließlich besitzt der Eigentümer 201 eines Produkts P noch ein Geheimdatum PIN₁, beispielsweise eine PIN oder dergleichen. Mittels dieses Geheimdatums PIN₁ ist ebenfalls eine Authentisierung des Eigentümers 201 bei dem Hintergrundsystem 100 möglich. Wie ein Eigentümer zu dem Geheimdatum PIN₁ kommt, wird nachfolgend mit Bezug auf die Schritte S15 und S16 beschrieben.

Bei einem Eigentumsübergang an dem Produkt P von einem alten Eigentümer 201 an einen neuen Eigentümer 202 wird dem neuen Eigentümer 202, wie mit Bezug auf Schritt S10 angedeutet, sowohl das Produkt P selbst als auch der dem Produkt zugeordnete Datenträger 400 übergeben. Weiterhin teilt der alte Eigentümer 201 dem neuen Eigentümer 202 das Geheimdatum PIN₁ mit. Sowohl den Datenträger 400 als auch das Geheimdatum PIN₁ wird der neue Eigentümer 202 nachfolgend benötigen (vgl. Schritt S15), um sich einmalig gegenüber dem Hintergrundsystem 100 als neuer Eigentümer 202 an dem Produkt P auszuweisen.

Zuerst aber meldet der alte Eigentümer 201 den Eigentumsübergang bei der Zertifizierungsstelle 500. Dazu authentisiert sich der alte Eigentümer 201 in Schritt S111 mittels seiner Identifikationsnummer Id₁ und beantragt bei der Zertifizierungsstelle 500 in Schritt S112 mit Bezug auf die Produktidentifikation P_{ID} eine neue Identifikationsnummer Id₂ für den neuen Eigentümer 202. Es ist möglich, dass der alte Eigentümer 201 der Zertifizierungsstelle 500 auch Eigentümerinformationen 300 betreffend den neuen Eigentümer 202 mitteilt, sofern er darüber verfügt. Zumindest teilt der alte Eigentümer 201 der Zertifizierungsstelle 500 Kontaktdaten mit, auf deren Basis die Zertifizierungsstelle 500 mit dem neuen Eigentümer 202 (vgl. Schritt S13) in Kontakt treten kann. Alternativ kann der neue Eigentümer 202 diese Eigentümerinformation 300 in einem nachfolgenden, nicht gezeigten Schritt der Zertifizierungsstelle 500 mitteilen.

Die Zertifizierungsstelle 500 authentifiziert den alten Eigentümer 201 anhand der empfangenen Identifikationsnummer Id₁ und generiert in Schritt S12, falls die vorhergehende Authentifizierung erfolgreich war, eine neue Identifikationsnummer Id₂ für den neuen Eigentümer 202.

In den Schritten S13 und S14 sendet die Zertifizierungsstelle 500 die neue Identitätsnummer Id₂ an den neuen Eigentümer 202 und - mit Bezug auf die Produktidentifikation Pm - auch an das Hintergrundsystem 100.

Um den Eigentumsübergang bei dem Hintergrundsystem 100 vollständig und gesichert dokumentieren zu können, ist es nun noch notwendig, dass sich der neue Eigentümer 202 bei dem Hintergrundsystem 100 authentisiert. Dies geschieht in Schritt S15. In einem ersten Teilschritt S151 authentisiert sich der neue Eigentümer 202 auf Basis der in Schritt S13 von der Zertifizierungsstelle 500 empfangenen neuen Identifikationsnummer Id₂. Diese liegt (vgl. Schritt S14) dem Hintergrundsystem 100 vor, so dass dieses den neuen Eigentümer 202 auf dieser Basis authentifizieren kann.

Weiter verlangt das Hintergrundsystem 100 von dem neuen Eigentümer 202, dass dieser sich in Schritt S152 mittels des Datenträgers 400 ausweist. Auf diese Weise kann sichergestellt werden, dass das Produkt P mit dem Datenträger 400 tatsächlich auch in den Besitz des neuen Eigentümers 202 übergegangen ist. Die in dem Datenträger 400 gespeicherte Information kann dazu beispielsweise über ein geeignetes Lesegerät ausgelesen und an das Hintergrundsystem 100 übertragen werden.

Schließlich authentisiert sich der neue Eigentümer 202 in Schritt S153 noch mittels des von dem alten Eigentümer 201 ebenfalls empfangenen Geheimdatums PIN₁. Damit ist gesichert, dass der alte Eigentümer 201 und der neue Eigentümer 202 tatsächlich über den Eigentumsübergang einig sind.

Das Hintergrundsystem 100 prüft nun sowohl die empfangenen Authentisierungsdaten auf Basis des Datenträgers 400 als auch des Geheimdatums PIN₁. Ist die diesbezügliche Authentifizierung erfolgreich verlaufen, generiert das Hintergrundsystem 100 für den neuen Eigentümer 202 in Schritt S16 ein neues Geheimdatum PIN₂. In Schritt S17 übermittelt das Hintergrundsystem 100 dem neuen Eigentümer 202 das neue Geheimdatum PIN₂.

Der Eigentumsübergang ist nun bei dem Hintergrundsystem 100 vollständig dokumentiert. Auf diese Weise kann auch ein Prüfer 10 sicher sein, dass die von ihm bei dem Hintergrundsystem 100 angeforderte Eigentümerinformation 300 stets korrekt und aktuell ist.

Unabhängig von einem Eigentumsübergang kann sich ein Eigentümer 200 stets bei dem Hintergrundsystem 100 authentisieren, beispielsweise um die Eigentümerinformation 300 zu aktualisieren oder zu ergänzen. Auch weitere Produktinformationen können durch den Eigentümer 200 nach erfolgreicher Authentisierung bei dem Hintergrundsystem 100 hinterlegt werden. Schließlich kann der Eigentümer 200 dem Hintergrundsystem 100 melden, wenn das Produkt abhanden gekommen ist, beispielsweise durch Diebstahl, oder beschädigt oder zerstört worden ist. Eine solche Information kann dem Prüfer 10 entweder - ähnlich einer gewöhnlichen Produktinformation - frei zugänglich gemacht werden oder aber, ähnlich der gewöhnlichen Eigentümerinformation 300, auf dem Weg der vorstehend mit Bezug auf Fig. 1 beschriebenen anonymisierten Anfrage.

In der Regel wird der Eigentümer 200 eine vorstehend beschriebene Authentisierung, welche nicht direkt einen Eigentumsübergang betrifft, mittels einer der beschriebenen Authentisierungsmittel durchführen können. D.h. es reicht aus, wenn er dem Hintergrundsystem 100 entweder seine Identitätsnummer Id₁, Id₂ oder den Datenträger 400 oder das Geheimdatum PIN₁, PIN₂ präsentiert. Es ist aber auch möglich, dass das Hintergrundsystem 100 strengere Authentisierungsregeln vorschreibt und weiterhin alle drei Authentisierungsmittel oder zumindest zwei daraus fordert.

## Patentansprüche

1. Verfahren zur Prüfung einer Eigentümerschaft an einem Produkt (P) durch einen Prüfer (10), umfassend die Schritte:
- Anfordern (S2) einer Eigentümerinformation (300) zu dem Produkt (P) durch den Prüfer (10) bei einem Hintergrundsystem (100) auf Basis einer Produktidentifikation (P_{ID}) des Produkts (P);
- Senden (S4) eines verschlüsselten Identitätsanteils (310) der Eigentümerinformation (300), welcher die Identität des Eigentümers (200) des Produkts (P) betrifft, an den Eigentümer (200) auf Basis eines unverschlüsselten Kontaktdatenanteils (320) der Eigentümerinformation (300), welcher Kontaktdaten des Eigentümers (200) umfasst;
- Entschlüsseln (S5) des verschlüsselten Identitätsanteils (310) durch den Eigentümer (200);
- Empfangen (S6) zumindest eines Anteils (A) des entschlüsselten Identitätsanteils (310') durch den Prüfer (10) von dem Eigentümer (200) als Eigentumsnachweis.

2. Verfahren nach Anspruch 1, **dadurch gekennzeichnet, dass** der verschlüsselte Identitätsanteil (310) der Eigentümerinformation (300) von dem Hintergrundsystem (100) an den Eigentümer (200) gesendet wird.

3. Verfahren nach Anspruch 1, **dadurch gekennzeichnet, dass** die Eigentümerinformation (300) mit dem verschlüsselten Identitätsanteil (310) und dem unverschlüsselten Kontaktdatenanteil (320) von dem Hintergrundsystem (100) an der Prüfer (10) gesendet wird, welcher dann den verschlüsselten Identitätsanteil (310) auf Basis der Kontaktdaten des Kontaktdatenanteils (320) an den Eigentümer (200) sendet.

4. Verfahren nach einem der Ansprüche 1 bis 3, **dadurch gekennzeichnet, dass** die Eigentümerinformation (300) durch das Hintergrundsystem (100) digital signiert wird.

5. Verfahren nach einem der Ansprüche 1 bis 4, **dadurch gekennzeichnet, dass** der Identitätsanteil (310) der Eigentümerinformation (300) mittels eines öffentlichen Schlüssels des Eigentümers (200) verschlüsselt und mittels eines geheimen Schlüssels des Eigentümers (200) entschlüsselt wird.

6. Verfahren nach einem der Ansprüche 1 bis 5, **dadurch gekennzeichnet, dass** dem Eigentümer (200) des Produkts (P) von einer Zertifizierungsstelle (500) eine Identifikationsnummer (Id₁; Id₂) zugeteilt wird, welche auch an das Hintergrundsystem (100) weitergegeben und der Produktidentifikation (P_{ID}) des Produkts (P) zugeordnet wird, wobei sich der Eigentümer (200) mittels der zugeteilten Identifikationsnummer (Id₁; Id₂) bei dem Hintergrundsystem (100) und/oder der Zertifizierungsstelle (500) authentisieren kann (S111).

7. Verfahren nach Anspruch 6, **dadurch gekennzeichnet, dass** der Eigentümer (201) des Produkts (P) bei einem Übergang des Eigentums an dem Produkt (P) an einen neuen Eigentümer (202) bei der Zertifizierungsstelle (500) mittels seiner Identifikationsnummer (Id₁) eine neue Identifikationsnummer (Id₂) für den neuen Eigentümer (202) beantragt (S112), die Zertifizierungsstelle (500) diese neue Identifikationsnummer (Id₂) generiert (S12) und an den neuen Eigentümer (202) und das Hintergrundsystem (100) übermittelt (S13; S14).

8. Verfahren nach Anspruch 7, **dadurch gekennzeichnet, dass** sich der neue Eigentümer (202) nach dem Übergang des Eigentums an dem Produkt (P) mittels der empfangenen neuen Identifikationsnummer (Id₂) bei dem Hintergrundsystem (100) authentisiert (S151).

9. Verfahren nach einem der Ansprüche 1 bis 8, **dadurch gekennzeichnet, dass** dem Produkt (P) ein portabler Datenträger (400) zugeordnet wird, welcher bei einem Eigentumsübergang bei dem Produkt (P) verbleibt und mittels dessen sich der jeweils aktuelle Eigentümer (200) bei dem Hintergrundsystem (100) authentisieren kann (S152).

10. Verfahren nach einem der Ansprüche 1 bis 9, **dadurch gekennzeichnet, dass** dem Eigentümer (200) ein Geheimdatum (PIN₁; PIN₂) zugeteilt wird, mittels dessen sich der Eigentümer (200) bei dem Hintergrundsystem (100) authentisieren kann (S153).

11. Verfahren nach Anspruch 10, **dadurch gekennzeichnet, dass** das Geheimdatum (PIN₁; PIN₂) bei einem Eigentumsübergang an dem Produkt (P) von dem alten Eigentümer (201) an den neuen Eigentümer (202) weitergegeben wird (S10) und sich der neue Eigentümer (202) nach dem Eigentumsübergang bei dem Hintergrundsystem (100) mittels des Geheimdatums (PIN₁) des alten Eigentümers (201) authentisiert (S153).

12. Verfahren nach Anspruch 8 bis 11, **dadurch gekennzeichnet, dass** der neue Eigentümer (202) nach einem Eigentumsübergang an dem Produkt (P) zum Authentisieren bei dem Hintergrundsystem (100) sowohl den portablen Datenträger (400) als auch das Geheimdatum (PIN₁) des alten Eigentümers (201) benötigt und/oder sowohl die neue Identifikationsnummer (Id₂) als auch den portablen Datenträger (400) benötigt und/oder sowohl die neue Identifikationsnummer (Id₂) als auch das Geheimdatum (PIN₁) des alten Eigentümers (201) benötigt und/oder sowohl die neue Identifikationsnummer (Id₂) als auch den portablen Datenträger (400) als auch das Geheimdatum (PIN₁) des alten Eigentümers (201) benötigt.

13. Verfahren nach Anspruch 11 oder 12, **dadurch gekennzeichnet, dass** der neue Eigentümer (202) nach erfolgreicher Authentisierung bei dem Hintergrundsystem (100) ein neues Geheimdatum (PIN₂) erhält, welches von dem Hintergrundsystem (100) erzeugt (S16) und dem neuen Eigentümer (202) zugeteilt wird (S17) oder welches durch den neuen Eigentümer (202) selbst erzeugt und dem Hintergrundsystem (100) mitgeteilt wird.

14. System (100) zur Unterstützung einer Prüfung einer Eigentümerschaft an einem Produkt (P) durch einen Prüfer (10), wobei das System (100) eingerichtet ist, zu einem Produkt (P) eine Produktidentifikation (P_{ID}) und eine Eigentümerinformation (300) zu verwalten sowie auf Anforderung der Eigentümerinformation (300) durch einen Prüfer (10) einen verschlüsselten Identitätsanteil (310) der Eigentümerinformation (300), welcher die Identität des Eigentümers (200) des Produkts (P) betrifft, an den Eigentümer (200) zu senden oder den verschlüsselten Identitätsanteil (310) sowie einen unverschlüsselten Kontaktdatenanteil (320) mit Kontaktdaten des Eigentümers (200) an den Prüfer (10) zu senden.

15. System (100) nach Anspruch 14, **dadurch gekennzeichnet, dass** das System eingerichtet ist, ein Verfahren nach einem der Ansprüche 1 bis 13 zu unterstützen.

16. Zertifizierungsstelle (500), eingerichtet zum Erzeugen (S12) und Ausgeben (S13; S14) einer Identifikationsnummer (Id₁; Id₂) an einen Eigentümer (200) eines Produktes (P), mittels derer sich der Eigentümer (200) bei einem System (100) nach Anspruch 14 oder 15 oder der Zertifizierungsstelle (500) im Rahmen eines Verfahrens nach einem der Ansprüche 1 bis 13 authentisieren kann (S11; S151).
